# EUROPÄISCHE PATENTANMELDUNG

(11) **EP 0 861 769 A1**
(43) Veröffentlichungstag der Anmeldung: **02.09.1998**
(21) Anmeldenummer: 97810109.5
(22) Anmeldetag: 28.02.1997
(51) Int. Cl.: B62K 19/16, B62K 19/06, B29C 65/00

(54) **Rahmenteil für ein Fahrrad und Verfahren zu seiner Herstellung**

(71) Anmelder: SSG (Europe) S.A., 1762 Giviez (CH)
(72) Erfinder: Wäger, Karl-Heinz, 6840 Götzis (AT)
(74) Vertreter: BOVARD AG - Patentanwälte

(57) **Zusammenfassung**

Die für Fahrradrahmen verwendeten hoch verstärkten Kunststoffe haben eine relativ rauhe Oberfläche, welche schlecht zum Aufbringen von Dekors und Beschriftungen geeignet ist. Der erfindungsgemässe Rahmenteil (1) besteht mindestens teilweise aus einem Hohlprofil (10) und weist auf seiner äusseren Oberfläche eine ihn mindestens teilweise umgreifende Kunststoffschale (11) auf. Die Kunststoffschale besteht aus zähem, elastischem Kunststoff und ist mit dem Material des Rahmenteils verbunden. Dadurch können die bisher erforderlichen Arbeitsgänge zur Nachbearbeitung der Oberfläche wie Spachteln, Schleifen und Lackieren entfallen. Darüber hinaus ist die Oberfläche des erfindungsgemässen Rahmenteils besser gegen mechanische Beschädigungen wie zum Beispiel Kratzer, aber auch gegen Angriffe durch Chemikalien geschützt als bei Fahrradrahmen nach dem Stand der Technik. Nach einer besonders bevorzugten Ausführungsart ist die Kunststoffschale transparent und weist auf ihrer Innenseite ein- oder mehrfarbige Verzierungen oder Beschriftungen auf.

## Beschreibung

Die Erfindung bezieht sich auf einen Rahmenteil für ein Fahrrad, welcher mindestens teilweise aus einem Hohlprofil besteht, sowie auf ein Verfahren zur Herstellung eines solchen Rahmenteils.

Es sind verschiedene Bauarten von Fahrradrahmen bekannt. Bei konventionellen Konstruktionen ist beispielsweise der das Hinterrad tragende Hinterbau in der Regel integraler Bestandteil des Hauptrahmens. Dagegen ist bei gewissen Spezialfahrrädern, beispielsweise bei sogenannten Full Suspension Mountainbikes das Hinterrad an einem mit dem Hauptrahmen gelenkig verbundenen Element, beispielsweise einer Schwinge, angeordnet. Der Begriff Rahmenteil schliesst im Zusammenhang mit der vorliegenden Erfindung alle Bestandteile des Rahmens eines Fahrrades wie Hauptrahmen, Hinterbau, Gabel für das Vorderrad und Schwinge für das Hinterrad ein.

Für die Herstellung von Fahrradrahmen sind eine Reihe verschiedener Verfahren bekanntgeworden und es ist bereits bekannt, Rahmenteile aus Hohlprofilen herzustellen. Um bei derartigen Hohlprofilen die erforderliche Festigkeit sicherzustellen, kann entweder ein metallisches Profil eingesetzt werden, oder aber ein entsprechend hoch verstärkter Kunststoff verwendet werden. Solche durch Fasern verstärkte Kunststoffe haben eine relativ rauhe Oberfläche. Wird eine solche Oberfläche direkt mit einer Lackschicht versehen, hat auch letztere eine rauhe Oberfläche, die sich schlecht zum Anbringen von Dekors oder Schriftzügen eignet. Zum Erreichen einer glatten Oberfläche und als Grundlage von Dekors oder Schriftzügen sind daher meistens mehrere Schleif- und Lackiervorgänge nötig, was einen erheblichen Aufwand erfordert. Wenn darüber hinaus beim Herstellen derartiger Teile noch Lunker entstehen, welche als Löcher oder Vertiefungen an der Oberfläche sichtbar werden können, was relativ häufig der Fall ist, müssen diese vorgängig mit einem Kitt verschlossen werden, welcher vor dem Schleifen aushärten muss. Dadurch wird der Arbeits- und Zeitaufwand zusätzlich erhöht.

Ein weiterer Negativaspekt ist die Umweltbelastung aufgrund der Lösungsmitteldämpfe, die bei der Verarbeitung von aufgespritzten Lackschichten entstehen.

Fahrradrahmen sind einer Reihe von mechanischen Beanspruchungen ausgesetzt und die auftretenden Biege- und Torsionsbeanspruchungen können auch bei faserarmierten Kunststoffen zu Brüchen führen. An der Aussenseite derartiger Rahmen aufgetragene Lackschichten tragen nichts zur Stabilisierung des Rahmens bei, und bei Bruch eines derartigen Rahmens besteht ein Verletzungsrisiko durch vorstehende spitze Rahmen- oder Armierungsteile. Ferner sind derartige Lackschichten relativ dünn und halten Beanspruchungen der Oberfläche, wie sie beispielsweise bei Stürzen oder durch Steinschlag auftreten können, nur beschränkt stand. Auch kleine Kratzer am Lack oder Dekor stellen für viele Fahrradbesitzer ein Ärgernis dar.

Die Erfindung zielt nun darauf ab, den Aufwand für die Nachbearbeitung von Rahmenteilen für das Erreichen einer glatten Oberfläche und die Aufbringung von Dekors und/oder Beschriftungen wesentlich zu verringern. Gleichzeitig soll durch die Erfindung die Festigkeit des Rahmenteils erhöht und dessen Oberfläche besser als bisher vor Beschädigungen geschützt werden.

Zur Lösung dieser Aufgabe besteht die erfindungsgemässe Ausbildung darin, dass der Rahmenteil auf seiner äusseren Oberfläche eine ihn mindestens teilweise umgreifende Kunststoffschale aufweist, welche aus zähem, elastischem Kunststoff besteht und mit dem Material des Rahmenteils verbunden ist.

Ein Verfahren zur Herstellung eines erfindungsgemässen Rahmenteils ist dadurch gekennzeichnet, dass auf der äusseren Oberfläche des Rahmenteils eine diesen mindestens teilweise umgreifende Kunststoffschale aus zähem, elastischem Kunststoff angebracht und mit dem Rahmenteil mittels eines Formwerkzeuges verbunden wird.

Es ist ein Vorteil des erfindungsgemässen Rahmenteils, dass Nachbearbeitungen wie Spachteln, Schleifen und Lackieren, die bisher zum Erreichen einer ansprechenden Oberfläche erforderliche waren, entfallen. Sollte es zum Brechen eines erfindungsgemässen Rahmenteils kommen, beispielsweise durch einen Unfall, besteht ein weiterer Vorteil darin, dass die Bruchstücke durch die zähe, elastische Kunststoffschale zusammengehalten werden, wodurch das Verletzungsrisiko wesentlich reduziert wird. Allgemein ist die Oberfläche des erfindungsgemässen Rahmenteils besser gegen mechanische Beschädigungen wie zum Beispiel Kratzer, aber auch gegen Angriffe durch Chemikalien geschützt als bei Fahrradrahmen nach dem Stand der Technik.

Vorzugsweise besteht der Rahmenteil aus faserverstärktem Kunststoff oder aus Metall und die Kunststoffschale weist eine glatte Aussenoberfläche auf. Die mechanische Festigkeit des Rahmenteils lässt sich zusätzlich erhöhen, wenn die Kunststoffschale mit dem Material des Rahmenteils durch Schweissen oder Kleben verbunden wird. Um die Herstellung zu vereinfachen, kann die Kunststoffschale aus Schalenteilen zusammengesetzt sein, wobei Ränder eines Schalenteils miteinander und/oder mit Rändern eines benachbarten Schalenteils verbunden werden können. Diese Ränder können stumpf aneinander stossen, sie können sich überlappen oder Flansche aufweisen. Der Kunststoff, aus dem die Schale besteht, ist vorzugsweise ein thermoplastischer Kunststoff, wodurch er an seinen Rändern und/oder mit dem Rahmenteil verschweissbar ist. Dieser Kunststoff kann beispielsweise ABS, Polyamid, Polyetheretherblockamid, Polyester oder thermoplastisches Polyurethan oder eine Mischung daraus sein.

Nach einer besonders bevorzugten Ausführungsart ist die Kunststoffschale transparent und weist auf ihrer Innenseite ein- oder mehrfarbige Verzierungen oder Beschriftungen auf. Ein solches Dekor ist nicht nur gegen mechanische und chemische Angriffe sehr gut geschützt, sondern auch gegen ultraviolette Strahlen. Auf der Innenseite kann das Dekor mindestens teilweise durch eine nicht transparente Schicht abgedeckt werden, je nach dem, ob das Material des Rahmenteils wenigstens an gewissen Stellen sichtbar sein soll oder nicht. Das Dekor kann durch bekannte Druckverfahren wie Thermoumdruckverfahren oder Sublimationsverfahren hergestellt werden. Wenn Dekors und/oder Schriften auf der Vorder- oder Rückseite des Kunststoffmaterials vor dem Verformen zu Schalenteilen appliziert werden, können die Dekors bzw. Schriften ununterbrochen um den ganzen Umfang der Profils des Rahmenteils reichen, was bei herkömmlichen Verfahren nur mit erheblichem Aufwand oder - beispielsweise mittels Tampondruck - gar nicht möglich war.

Die Materialstärke der Kunststoffschale kann zwischen 0,1 und 3 mm liegen, vorzugsweise beträgt sie 0,2 bis 0,5 mm. Bevorzugt wird die Kunststoffschale bzw. die Schalenteile aus einer monoextrudierten oder einer koertrudierten Folie hergestellt, welche vor dem Verbinden mit dem Rahmenteil vorgeformt wird, beispielsweise durch Tiefziehen. Eine besonders bevorzugte Herstellungsart der Schalenteile besteht darin, dass man Zuschnitte anfertigt, welche im wesentlichen ohne Streckung des Materials vorgeformt werden können. Im Gegensatz zum Tiefziehen treten bei diesem Verfahren praktisch keine Verzerrungen des Dekors auf. Das Vorformen der aus Zuschnitten herzustellenden Schalenteile erfolgt bevorzugt in einem Formwerkzeug, in welchem die Zuschnitte mittels eines druckbeaufschlagten Schlauches gegen die Formwände gepresst werden.

Weitere Vorteile und Einzelheiten der Erfindung werden im folgenden anhand einiger Ausführungsbeispiele unter Bezugnahme auf die beiliegenden Zeichnungen beschrieben. Es zeigen
Figur 1 eine perspektivische Ansicht eines Hauptrahmens für ein Fahrrad mit Kunststoffschale gemäss der Erfindung,
Figur 2 einen Querschnitt durch einen Rahmenteil nach dem Stand der Technik,
Figur 3 einen Querschnitt durch einen Rahmenteil mit einer Kunststoffschale, welche an zwei Rändern Flansche aufweist,
Figur 4 einen Querschnitt durch einen Rahmenteil mit zwei Halbschalen mit Flanschen,
Figur 5 einen Querschnitt durch einen Rahmenteil mit einer Kunststoffschale, die an zwei Rändern stumpf aneinander stossen,
Figur 6 einen Querschnitt durch einen Rahmenteil mit einer Kunststoffschale, deren Ränder sich an einer Stelle überlappen,
Figur 7 einen Querschnitt durch einen Rahmenteil mit zwei sich überlappenden Halbschalen,
Figur 8 eine perspektivische Ansicht eines quer geschnittenen Rahmenteils mit zwei ihn umgebenden Halbschalen, die an ihren Rändern verzahnte Flansche aufweisen,
Figur 9 eine perspektivische Ansicht einer quer geschnittenen Kunststoffschale mit verzahnten Rändern, die stumpf aneinander stossen,
Figur 10 einen Querschnitt durch einen Rahmenteil und eine vorgeformte Kunststoffschale vor dem Zusammenfügen in einem Formwerkzeug,
Figur 11 einen Querschnitt durch einen Rahmenteil mit zwei Schalenteilen in einem geschlossenen Formwerkzeug,
Figur 12 einen Querschnitt durch einen Rahmenteil mit einem diesen umgebenden rohrförmigen Schalenteil vor der Verarbeitung in einem Formwerkzeug,
Figur 13 einen perspektivischen Querschnitt durch den Rahmenteil nach Figur 12 nach dem Verarbeiten,
Figur 14A und B einen rechteckigen Zuschnitt und einen daraus vorgeformten, im wesentlichen zylindrischen Schalenteil,
Figur 15A und B einen rechteckigen Zuschnitt und einen daraus vorgeformten, im wesentlichen halbzylindrischen Schalenteil,
Figur 16A und B einen weiteren Zuschnitt und einen daraus vorgeformten Schalenteil mit im wesentlichen zylindrischer Form,
Figur 17A und B einen streifenförmigen Zuschnitt und einen durch schraubenförmiges Winden desselben erhaltenen, im wesentlichen zylindrischen Schalenteil.

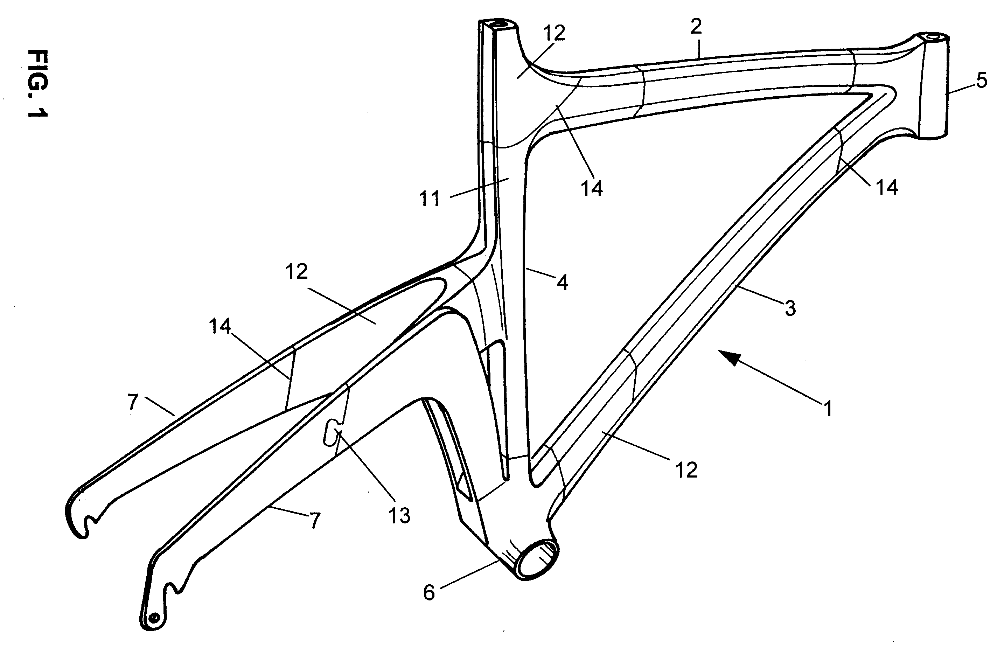

Der in Figur 1 perspektivisch dargestellte Hauptrahmen 1 mit Oberrohr 2, Unterrohr 3, Sitzrohr 4, Steuerrohr 5, Aufnahme 6 für das Tretlager und den beiden Hinterradstreben 7 ist einstückig aus einem faserverstärkten Kunststoff hergestellt. Der gesamte Rahmen ist von einer Kunststoffschale 11 umschlossen. Zur Vereinfachung ihrer Herstellung kann die Kunststoffschale aus mehreren Schalenteilen 12 hergestellt werden, die an den mit 14 bezeichneten Rändern miteinander verbunden sind. Die Verbindungen sind aber in der Regel am fertigen Rahmen nicht sichtbar. An schlecht sichtbaren und schlecht zugänglichen Stellen, wie zum Beispiel an den Innenseiten der Hinterradstreben 7, muss das Rahmenprofil nicht unbedingt ganz von der Kunststoffschale umgriffen werden.

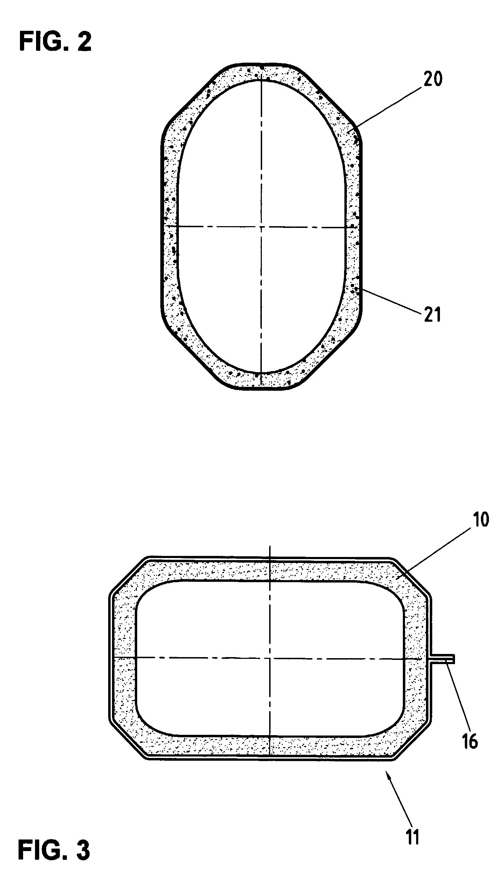

Figur 2 zeigt einen Querschnitt durch einen Rahmenteil 20 nach dem Stand der Technik, der ebenfalls aus einem faserverstärkten Kunststoff hergestellt ist. Auf seiner Oberfläche 21 trägt der Rahmenteil 20 mehrere Lackschichten, die auch Schriftzüge oder Dekors umfassen können. Um diesen Lackschichten ein glattes Aussehen zu verleihen, muss die Oberfläche vorgängig fein geschliffen werden, was einen erheblichen Arbeitsaufwand mit sich bringt. Im übrigen weist eine derartige Lackschicht die bereits eingangs erwähnten Nachteile auf.

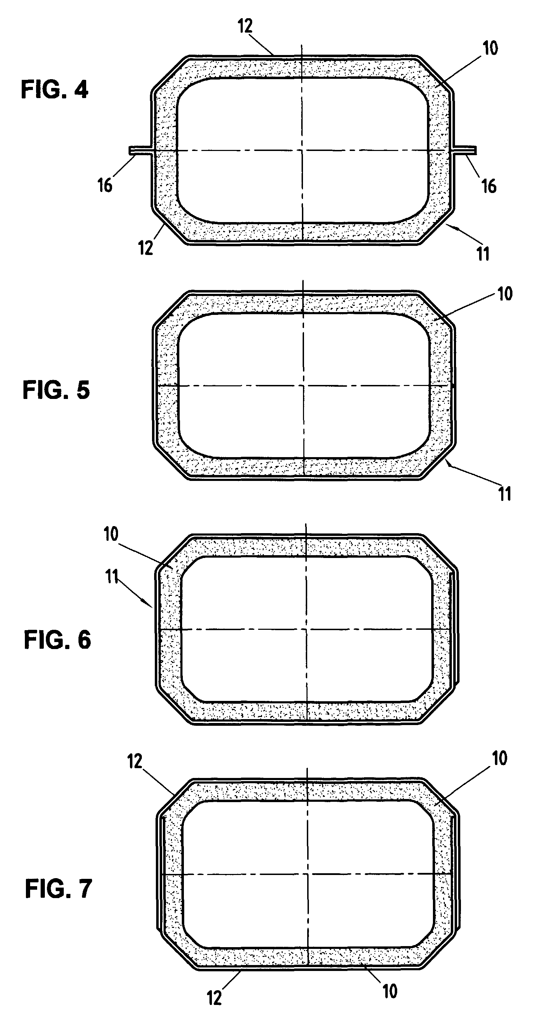

Figur 3 zeigt einen Querschnitt durch das Profil 10 eines Rahmenteils mit einer dieses umschliessenden Kunststoffschale 11. Das Material der Kunststoffschale ist an zwei Rändern nach aussen abgeknickt und bildet zwei Flansche 16, die durch Schweissen, Kleben, Verzahnen oder Verpressen in einer Form miteinander verbunden werden können. Wie im Beispiel gemäss Figur 4 gezeigt ist, können auch mehrere Flansche 16 über den Umfang des Profils verteilt vorgesehen werden.

Die Figuren 5 bis 7 zeigen weitere Möglichkeiten, wie das Material der Schalenteile an deren Rändern verbunden werden kann, nämlich gemäss Figur 5 stumpf aneinanderstossend und gemäss Figur 6 und 7 an einer bzw. zwei Stellen überlappend.

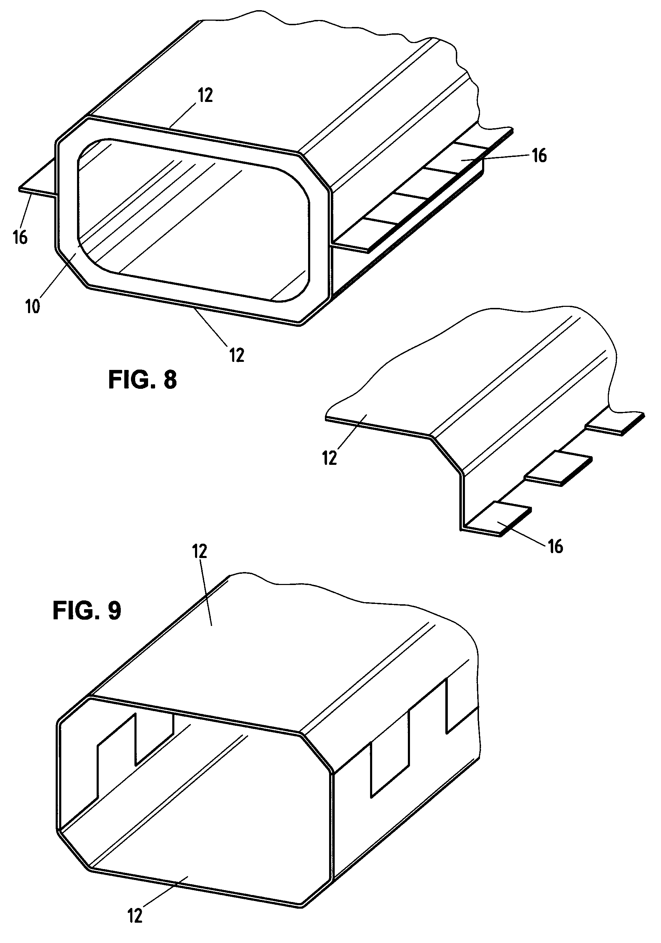

Die Figuren 8 und 9 zeigen, dass die vorangehend beschriebenen Methoden zum Verbinden der Ränder der Schalenteile auch kombiniert werden können. In Figur 8 sind verzahnte Ränder dargestellt, welche als Flansche 16 ausgebildet sind und Figur 9 zeigt verzahnte Ränder, die stumpf aneinander stossen. Die Verzahnung muss dabei nicht wie dargestellt ausgebildet sein, sondern kann auch andere Formen aufweisen, beispielsweise nach Art eines Puzzles, wie dies in Figur 1 mit der Bezugszahl 13 angedeutet ist. Dieses Beispiel veranschaulicht ferner, dass alle beschriebenen Arten, die Ränder eines Schalenteils miteinander zu verbinden, sowohl auf Schalenteile angewendet werden können, die um das Rahmenprofil herumreichen und mit sich selbst verbunden werden, als auch auf benachbarte, bezüglich des Profils einander gegenüberliegende oder in Längsrichtung aneinander angrenzende Schalenteile.

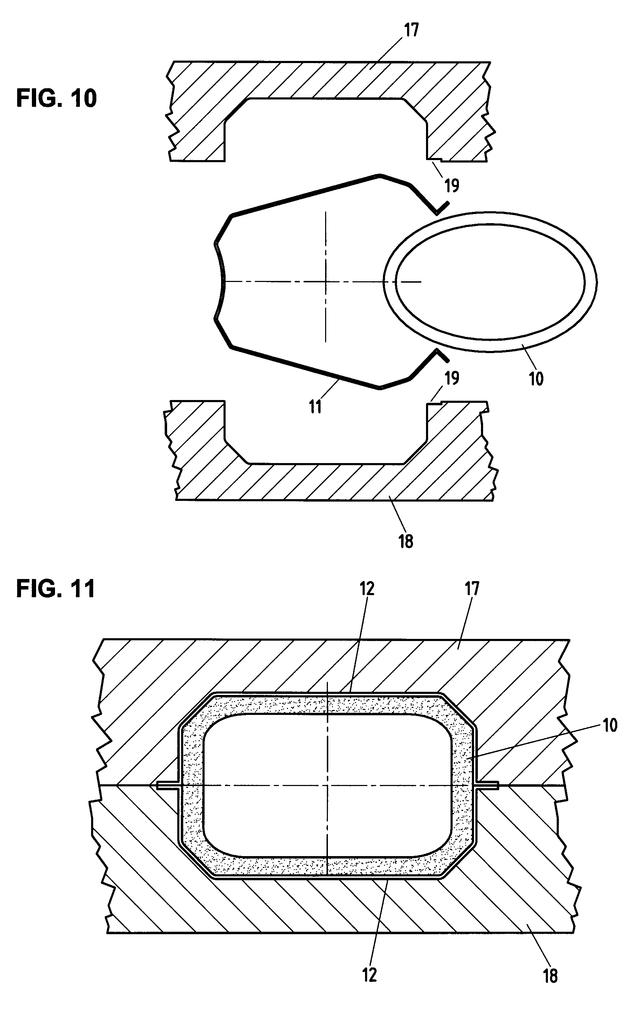

In Figur 10 ist ein aus einem Oberteil 17 und einem Unterteil 18 bestehendes Formwerkzeug im Querschnitt dargestellt. Zwischen den Werkzeugteilen befindet sich eine vorgeformte, aufgespreizte Kunststoffschale 11, in die ein Profil 10 eingeschoben wird. Das Profil 10 aus faserverstärktem Kunststoff hat nicht seinen endgültigen Querschnitt und ist nur teilweise ausgehärtet. Die Kunststoffschale 11 kann aus transparentem Material bestehen und auf ihrer Innenoberfläche mit einem Dekor oder einem Schriftzug versehen sein. Zusätzlich kann auf der Innenseite des Dekors bzw. Schriftzuges noch eine undurchsichtige Schicht angebracht sein. Wird die gegebenenfalls erwärmte Form geschlossen, wird das Profil über seine gesamte Aussenoberfläche mit der Kunststoffschale verbunden und gleichzeitig so umgeformt, dass es das in Figur 11 gezeigte Aussehen annimmt. Mit 19 sind Ausnehmungen in beiden Formhälften bezeichnet, welche zur Aufnahme des Flansches 16 der Kunststoffschale bestimmt sind.

Figur 11 zeigt ein ähnliches Formwerkzeug wie Figur 10 in geschlossenem Zustand, wobei hier die Ränder der Schalenteile auf zwei gegenüberliegenden Seiten des Profils durch Flansche miteinander verbunden sind.

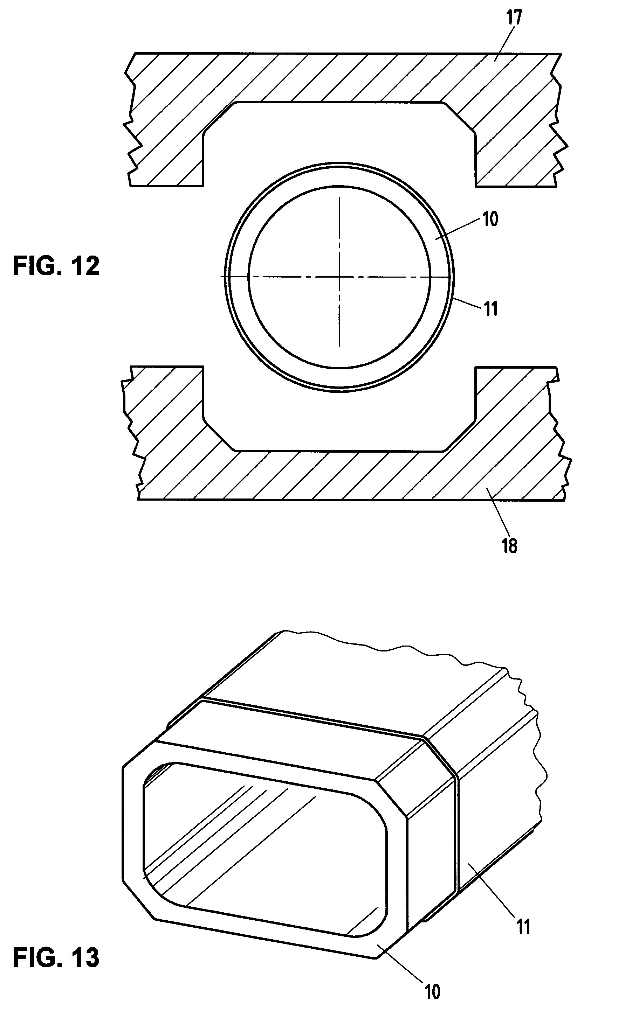

In Figur 12 ist in ähnlicher Darstellung wie in Figur 10 ein offenes Formwerkzeug 17, 18 gezeigt, wobei hier das Profil 10 noch kreisrund ist und die Kunststoffschale 11 rohr- oder schlauchförmig ausgebildet ist. Dementsprechend können die Ausnehmungen 19 für einen Flansch hier entfallen. Diese Ausführungsart eignet sich für Rahmenteile, die frei abragende Enden aufweisen, über die rohr- oder schlauchförmige Schalenteile geschoben werden können, wie beispielsweise die in Figur 1 gezeigten Hinterradstreben 7 oder eine Vorderradgabel. Nach der Verarbeitung in der Form hat der Rahmenteil den in Figur 13 gezeigten Querschnitt.

Es ist vorteilhaft, das Aufbringen von Dekors und/oder Schriftzügen auf die Kunststoffschale vor dem Vorformen durchzuführen. Ein flächiges Material, beispielsweise eine Folie, lässt sich mit verschiedensten Methoden, vorzugsweise aber mit Siebdruck, Thermotransferdruck oder Thermodiffusionsdruck einfach bedrucken. Denkbar sind aber auch weitere Methoden wie Tintenstrahldruck oder Laserdruck. Schliesslich könnte man sogar von Hand mit Pinsel oder Feder Dekors und Schritten anbringen. Bei Verwendung eines durchsichtigen oder transparenten Kunststoffmaterials ist es sehr vorteilhaft, wenn Dekors oder Beschriftungen auf der Rückseite angebracht werden, das heisst auf der Seite, die später mit dem Rahmenteil verbunden wird. Schritten müssen dabei natürlich spiegelverkehrt sein. Je nachdem, ob es erwünscht ist, dass die Struktur und Farbe des Rahmenteils nach dem Verbinden mit der Kunststoffschale ganz oder teilweise sichtbar ist, kann man eine zusätzliche undurchsichtige Deckschicht nur an gewissen Stellen hinzufügen.

Zum Vorformen der Schalenteile kommen verschiedene Verfahren in Frage. Die Schalenteile können beispielsweise durch Tiefziehen aus einer Folie hergestellt werden. Dieses Verfahren eignet sich besonders für die Herstellung von Schalenteilen mit komplizierten Formen, wie sie beispielsweise im Bereich des Steuerrohrs 5 oder der Aufnahme 6 für das Tretlager (Figur 1) gebraucht werden. Beim Tiefziehen ist es unvermeidlich, dass an den Rändern flanschartige Überstände entstehen. Dies kann aber erwünscht sein, nämlich dann, wenn die Schalenteile in der in den Figuren 3, 4, 10 und 11 dargestellten Art mit Flanschen 16 miteinander verbunden werden sollen. Diese Art der Verbindung hat den Vorteil, dass sich die vorgeformten Schalenteile dank ihrer Flansche in dem zum Verbinden vorgesehenen Formwerkzeug leicht positionieren lassen. Sollten die Flansche aber stören, können sie natürlich auch vor dem Verarbeiten im Formwerkzeug entfernt werden. Das Vorformen durch Tiefziehen hat den Nachteil, dass das Material dabei an verschiedenen Stellen unterschiedlich stark gestreckt wird, was bei bereits darauf angebrachten Dekors oder Schriftzügen zu Verzerrungen führen kann, die insbesondere bei Schriftzügen störend wirken.

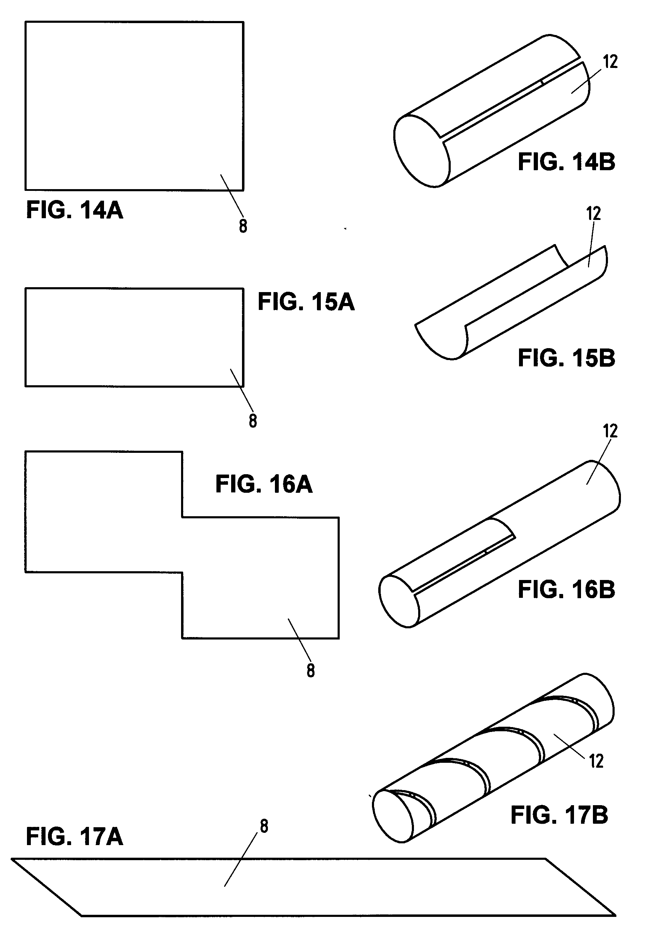

Sollen Verzerrungen von Dekors und Schriftzügen vermieden werden, empfiehlt es sich, die Schalenteile aus Zuschnitten herzustellen, die so gestaltet sind, dass sie im wesentlichen ohne Streckung des Materials vorgeformt werden können, indem sie praktisch nur gebogen werden. Die Figuren 14A bis 17B zeigen Beispiele solcher Zuschnitte 8 und daraus vorgeformter Schalenteile 12. Im einfachsten Fall können solche Zuschnitte rechteckig ausgebildet sein (Figur 14A und 15A) und zu zylindrischen (Figur 14B) oder halbzylindrischen (Figur 15B) Schalenteilen vorgeformt werden. Die Zuschnitte können je nach Erfordernissen des betreffenden Rahmenteils oder des Dekors bzw. des Schriftzuges gestaltet werden. In Figur 16A ist beispielsweise ein Zuschnitt 8 dargestellt, der dazu bestimmt ist, zu einem rohrförmigen Schalenteil 12 nach Figur 16B vorgeformt zu werden, bei welchem die miteinander zu verbindenden Ränder teils auf der einen und teils auf der gegenüberliegenden Seite des Rahmenprofils liegen. Schliesslich zeigt Figur 17A einen band- oder streifenförmigen Zuschnitt 8, der dazu bestimmt ist, zu einem schraubenartig gewundenen Schalenteil gemäss Figur 17B vorgeformt zu werden.

Das Vorformen von Schalenteilen aus Zuschnitten kann in einem separaten Formwerkzeug erfolgen, oder es kann dafür das selbe Formwerkzeug verwendet werden, das später zum Verbinden der Schalenteile mit dem Rahmenteil gebraucht wird. Als besonders vorteilhaft hat sich folgendes Vorgehen erwiesen. Die Zuschnitte werden zuerst von Hand vorgebogen und in das Formwerkzeug eingelegt. Gleichzeitig oder anschliessend wird ein dehnbarer Schlauch ebenfalls in das Formwerkzeug eingelegt, so, dass dieser von den Zuschnitten umgeben ist. Dann wird das Formwerkzeug geschlossen und erwärmt und der Schlauch mit einer Druckfluidquelle verbunden und mit Druck beaufschlagt. Dadurch dehnt sich der Schlauch aus und drückt die Zuschnitte von innen an die Wandungen des Formwerkzeuges. Während nun das Formwerkzeug abgekühlt wird, bleibt es geschlossen und der Druck im Schlauch wird aufrecht erhalten. Nach dem Erkalten und Öffnen des Formwerkzeuges kann der vorgeformte Schalenteil entnommen werden.

Bevor die vorgeformten Schalenteile zum Verbinden mit dem Rahmenteil zusammengebracht werden, kann gegebenenfalls der Rahmenteil oder der Schalenteil mit einem Klebstoff, einem Heisskleber (hot melt), einem Primer, einem Haftvermittler oder einer Schicht aus schmelzbarem Vlies versehen werden. Falls dadurch bereits im kalten Zustand eine gewisse Haftwirkung besteht, kann diese zum Positionieren der Schalenteile auf dem Rahmenteil ausgenutzt werden. Nun wird der Rahmenteil zusammen mit den damit zu verbindenden Schalenteilen in das entsprechende Formwerkzeug eingelegt. Dabei können Schalenteile, die durch Tiefziehen vorgeformt wurden und solche, die wie vorangehend beschrieben aus Zuschnitten vorgeformt wurden, beliebig miteinander kombiniert werden. Nun wird das Formwerkzeug geschlossen und erwärmt. Dadurch werden die Schalenteile durch Kleben oder Schweissen, je nach Verwendung der Werkstoffkombination und allfälliger Zwischenlagen, miteinander verbunden. Auch die Ränder der Schalenteile werden auf diese Weise miteinander verbunden. Dabei können auch kleine Ungenauigkeiten ausgeglichen werden, indem das Material der Schalenteile erweicht wird und insbesondere an den Rändern zusammenfliesst. Bei Verwendung eines kalt aushärtbaren Klebstoffes, beispielsweise eines Epoxydklebstoffes, könnte auf das Erwärmen des Formwerkzeuges verzichtet werden, wodurch aber die Verarbeitungszeit steigen und das Verfahren weniger wirtschaftlich würde.

## Patentansprüche

1. Rahmenteil (1) für ein Fahrrad, welcher mindestens teilweise aus einem Hohlprofil (10) besteht, dadurch gekennzeichnet, dass er auf seiner äusseren Oberfläche eine ihn mindestens teilweise umgreifende Kunststoffschale (11) aufweist, welche aus zähem, elastischem Kunststoff besteht und mit dem Material des Rahmenteils verbunden ist.

2. Rahmenteil nach Anspruch 1, dadurch gekennzeichnet, dass der Rahmenteil aus faserverstärktem Kunststoff oder aus Metall besteht.

3. Rahmenteil nach Anspruch 1 oder 2, dadurch gekennzeichnet, dass die Kunststoffschale (11) eine glatte Aussenoberfläche aufweist.

4. Rahmenteil nach einem der Ansprüche 1 bis 3, dadurch gekennzeichnet, dass die Kunststoffschale mit dem Material des Rahmenteils durch Schweissen oder Kleben verbunden ist.

5. Rahmenteil nach einem der Ansprüche 1 bis 4, dadurch gekennzeichnet, dass die Kunststoffschale (11) aus Schalenteilen (12) zusammengesetzt ist.

6. Rahmenteil nach Anspruch 5, dadurch gekennzeichnet, dass Ränder eines Schalenteils miteinander und/oder mit Rändern eines benachbarten Schalenteils verbunden sind.

7. Rahmenteil nach Anspruch 6, dadurch gekennzeichnet, dass die miteinander verbundenen Ränder stumpf aneinander stossen. (Figur 5, 9)

8. Rahmenteil nach Anspruch 6, dadurch gekennzeichnet, dass die miteinander verbundenen Ränder verzahnt sind. (Figur 8, 9)

9. Rahmenteil nach Anspruch 6, dadurch gekennzeichnet, dass die miteinander verbundenen Ränder Flansche (16) aufweisen. (Figur 3, 4, 8, 10, 11)

10. Rahmenteil nach Anspruch 6, dadurch gekennzeichnet, dass die miteinander verbundenen Ränder sich überlappen. (Figur 6, 7)

11. Rahmenteil nach einem der Ansprüche 1 bis 10, dadurch gekennzeichnet, dass der Kunststoff der Schale ein thermoplastischer Kunststoff ist.

12. Rahmenteil nach einem der Ansprüche 1 bis 11, dadurch gekennzeichnet, dass der Kunststoff der Schale aus einer monoextrudierten oder einer koextrudierten Folie besteht.

13. Rahmenteil nach einem der Ansprüche 1 bis 12, dadurch gekennzeichnet, dass der Kunststoff der Schale ABS, Polyamid, Polyetheretherblockamid, Polyester oder thermoplastisches Polyurethan ist.

14. Rahmenteil nach einem der Ansprüche 1 bis 12, dadurch gekennzeichnet, dass der Kunststoff der Schale ein Gemisch von ABS und Polyamid ist.

15. Rahmenteil nach einem der Ansprüche 1 bis 12, dadurch gekennzeichnet, dass der Kunststoff der Schale ein Gemisch von Polyamid und Polyetheretherblockamid ist.

16. Rahmenteil nach einem der Ansprüche 1 bis 15, dadurch gekennzeichnet, dass die Materialstärke der Kunststoffschale 0,1 bis 3 mm, vorzugsweise 0,2 bis 0,5 mm beträgt.

17. Rahmenteil nach einem der Ansprüche 1 bis 16, dadurch gekennzeichnet, dass die Kunststoffschale transparent ist.

18. Rahmenteil nach Anspruch 17, dadurch gekennzeichnet, dass die Kunststoffschale innenseitig ein- oder mehrfarbig verziert oder beschriftet, beispielsweise bedruckt ist.

19. Rahmenteil nach einem der Ansprüche 1 bis 18, dadurch gekennzeichnet, dass die Kunststoffschale aussenseitig ein- oder mehrfarbig verziert oder beschriftet, beispielsweise bedruckt ist.

20. Verfahren zur Herstellung eines Rahmenteils nach einem der Ansprüche 1 bis 19, dadurch gekennzeichnet, dass auf der äusseren Oberfläche des Rahmenteils eine diesen mindestens teilweise umgreifende Kunststoffschale aus zähem, elastischem Kunststoff angebracht und mit dem Rahmenteil mittels eines Formwerkzeuges verbunden wird.

21. Verfahren nach Anspruch 20, dadurch gekennzeichnet, dass der Rahmenteil aus faserverstärktem Kunststoff oder Metall besteht.

22. Verfahren nach Anspruch 20 oder 21, dadurch gekennzeichnet, dass das Formwerkzeug erwärmt wird.

23. Verfahren nach einem der Ansprüche 20 bis 22, dadurch gekennzeichnet, dass der Rahmenteil und/oder die Kunststoffschale vor dem Verbinden mit einer Klebeschicht oder einem Haftvermittler, vorzugsweise einem Primer oder einer Vliesstoffschicht, versehen wird.

24. Verfahren nach einem der Ansprüche 20 bis 23, dadurch gekennzeichnet, dass die Kunststoffschale aus Schalenteilen zusammengesetzt wird.

25. Verfahren nach Anspruch 24, dadurch gekennzeichnet, dass die Schalenteile vor dem Verbinden mit dem Rahmenteil vorgeformt werden.

26. Verfahren nach Anspruch 25, dadurch gekennzeichnet, dass das Vorformen durch Tiefziehen einer Folie erfolgt.

27. Verfahren nach Anspruch 25, dadurch gekennzeichnet, dass die Schalenteile aus Zuschnitten aus einer Folie hergestellt werden, welche im wesentlichen ohne Streckung der Folie vorgeformt werden.

28. Verfahren nach Anspruch 27, dadurch gekennzeichnet, dass das Vorformen in einem Formwerkzeug erfolgt, indem die Zuschnitte mittels eines druckbeaufschlagten Schlauches gegen die Formwände gepresst werden.

29. Verfahren nach einem der Ansprüche 25 bis 28, dadurch gekennzeichnet, dass die vorgeformten Schalenteile mechanisch auf den Querschnitt des Rahmenteils umgeformt werden.

30. Verfahren nach einem der Ansprüche 25 bis 29, dadurch gekennzeichnet, dass die vorgeformten Schalenteile thermisch-mechanisch auf den Querschnitt des Rahmenteils umgeformt werden.

31. Verfahren nach einem der Ansprüche 20 bis 26, dadurch gekennzeichnet, dass etwaige Überstände der Kunststoffschale, beispielsweise Flansche, nach dem Verbinden abgetrennt werden.

32. Verfahren nach einem der Ansprüche 20 bis 31, dadurch gekennzeichnet, dass die Kunststoffschale transparent ist.

33. Verfahren nach Anspruch 32, dadurch gekennzeichnet, dass die Kunststoffschale vor dem Vorformen innenseitig ein- oder mehrfarbig verziert und/oder beschriftet, beispielsweise bedruckt wird.

34. Verfahren nach Anspruch 33, dadurch gekennzeichnet, dass die Verzierungen und/oder Beschriftungen auf der Innenseite mindestens teilweise durch eine nicht transparente Schicht abgedeckt werden.

35. Verfahren nach einem der Ansprüche 20 bis 34, dadurch gekennzeichnet, dass die Kunststoffschale aussenseitig ein- oder mehrfarbig verziert und/oder beschriftet, beispielsweise bedruckt wird.

36. Verfahren nach einem der Ansprüche 34 oder 35, dadurch gekennzeichnet, dass das Verzieren oder Beschriften im Thermoumdruckverfahren oder Sublimationsverfahren erfolgt.
